(19) Europäisches Patentamt / European Patent Office / Office européen des brevets

(11) **EP 3 533 318 A1**

(12) **EUROPEAN PATENT APPLICATION**

(43) Date of publication:
**04.09.2019 Bulletin 2019/36**

(51) Int Cl.:
*A01G 7/04* *(2006.01)* *A01G 9/20* *(2006.01)*

(21) Application number: **19159926.5**

(22) Date of filing: **28.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.03.2018 IT 201800003161**

(71) Applicant: **C-LED S.R.L.**
**40026 Imola (BO) (IT)**

(72) Inventors:
• **Pasini, Alessandro**
 **40026 Imola (IT)**
• **Accorsi, Mattia**
 **40026 Imola (IT)**

(74) Representative: **Del Nero, Susanna**
 **CEFLA Società Cooperativa**
 **Via Selice Provinciale, 23/A**
 **40026 Imola (BO) (IT)**

(54) **LAMPS FOR GREENHOUSE**

(57) Method and system for lighting plants grown in a greenhouse using interlight lamps placed between two adjacent rows of plants, wherein the axis (a) of the cone (K) of light emission of said interlight lamps (5, 6, 7) is provided with an inclination angle with respect to the ground (S) and/or to a plane parallel to the ground and/or to a horizontal direction, which angle is variable according to the height of placement from the ground of said lamp with respect to the plant height, i.e. to the point of emergence of plant trunk with respect to the ground.

**FIG. 3**

**2**     **6**     **2**

a       a

a       a

2,6 m

1,5 m

**5**

# FIG. 4

**2**     **2**

**6**

a     a

**5**

a     a

3,5 m

a     a

2,5 m

**7**

1,4 m

# FIG. 5

**Description**

The present invention relates to the technical field of lighting, in particular to a method for installing lamps for growing vegetables in greenhouses, which promote the growing of vegetables thanks to the particular inclination of their light sources with respect to leaf area.

In the art, lamps making use of LEDs emitting specific wavelengths are known, for growing edible and/or ornamental plants indoor.

In a greenhouse, which typically is provided with covers made of transparent material (glass or plastics), sunlight comes mainly from above. This leads plants to orient their leaves so as to maximize the quantity of received light, phenomenon known as phototropism. It is known that plants spontaneously tend to orient their leaves at an angle of 45°-60° with respect to ground.

In this context, it is important to distinguish between ground or substrate and floor. Often in greenhouses plant are grown on surfaces raised with respect to greenhouse floor: said raised surfaces usually lie at 20-80 cm with respect to greenhouse floor. In the following, when reference is made to the growing height with respect to ground, as ground the point of plant trunk emergence from a surface is meant, which can lie at a height different from that of the floor. Said ground is generally parallel to the greenhouse floor, or anyway parallel to a horizontal direction.

In the greenhouses, wherein vertical habit plants are grown (Solanaceae, Cucurbitaceae) the density of plants per square metre and the number of leaves limit the quantity of natural and artificial light coming from above. Therefore, in addition to natural light or top light lamps (emitting light coming from above in a perpendicular way with respect to ground, i.e. parallel to plant trunk), interlight lamps (arranged between two adjacent rows) are preferably used, in order to ensure an adequate quantity of light to the whole vertical development of a plant. Typically, interlight lamps are placed between plants, inside canopy.

EP2656728A1 of Valoya OY describes an apparatus and a method for providing artificial light optimally to plants during their growth cycle in a greenhouse, using lighting devices that can be moved vertically, while at least one light emitter and/or reflector is rotated to maximize light exposure from said lighting device on said plants.

US2014268635, of Valoya OY too, describes an apparatus and a method wherein the apparatus includes multiple LEDs (Light Emitting Diode) configured to excite a single remote phosphor up-conversion unit, typically realized on a replaceable cover glass of the light.

US2012043907 of Lu Junying Jonathan describes a compact high-brightness LED grow light fixture for use in growing plants under artificial light, or as a supplement to natural sunlight. The LED grow light uses a densely-packed array of high-brightness light emitting diodes (LEDs) that are not individually packaged where the array behaves similarly to a point source of light.

The paper Reducing the carbon footprint of greenhouse grown crops: re-designing LED-based production systems di Dieleman et al. (Acta Hortic. 1134. ISHS 2016. DOI 10.17660/ActaHortic.2016.1134.51) proposes to orient LEDs at 30° towards the ground, (i.e. -30° with respect to a horizontal direction, as will be more clearly defined in the following) with the aim of improving the interception of light by plants. Said paper is based on a mathematical modelling of such an arrangement, without providing an empirical experimentation.

Typically, one of the main reasons of success of greenhouse agriculture is the possibility of controlling almost all microclimatic conditions (temperature, humidity, photoperiodism). This has strong repercussions on the vegetal physiology and on the control of abiotic and biotic conditions, with special reference to the control of pests (parasites, fungi and bacteria). During summer, temperature can be decreased, while during winter, temperature is increased, obtaining the ideal temperature for these plants, which ranges 16 - 25°C.

Aim of the present invention is providing a method and an apparatus to increase the yield of greenhouse-grown plants, thanks to the optimal inclination of the light source with respect to leaf area and to the suitable placement of the lamp itself along the whole vertical dimension of the plant.

This object is achieved by a method and an apparatus having the features of the independent claims. Advantageous embodiment and refinements are specified in the claims dependent thereon.

The method according to the present invention provides to install a variable number of interlight lamps, i.e. lamps aligned and vertically coinciding with the intermediate spaces between plant rows; the number of lamps depending on the vertical development of the growing plant according to the following formula:

$$\text{N. of lamps} = \text{height of plant (in metres)} - 1$$

Experimentally, it was found that best results are obtained when the lamps are not all the same, but are provided with an inclination of the central ray of the light cone, which is variable according to the height of installation with reference to the point of a surface from which plant trunks emerge.

In particular, the number of lamps and their inclination are variable according to the vertical dimension of the plant to be grown. Surprisingly, the best results were obtained modifying the mix of lamps as explained in the following embodiments.

In a first embodiment, the height of the plants to be grown is in the order of 2 metres from ground, and at a height ranging 1.3 m - 1.7 m from ground just one interlight lamp is installed, emitting light with an inclination of -30° with respect to ground or to a horizontal direction.

In a second embodiment, the height of the plants to be grown is in the order of 3 metres from ground. At a height ranging 1.1 m - 1.6 m from ground an interlight lamp emitting with an inclination of -30° with respect to ground is installed, while at a height ranging 2 - 2.7 metres from ground an interlight lamp is installed, emitting with an inclination of -45° with respect to the ground or to a horizontal direction.

In a third embodiment, the height of the plants to be grown is in the order of 4 metres from ground. At a height ranging 1.1 m - 1.6 m from ground an interlight lamp emitting with an inclination of 0° with respect to ground is installed, at a height ranging 2 - 2.7 metres from ground a lamp emitting with an inclination of -30° with respect to ground is installed, while at an height ranging 3 - 3.7 metres from ground an interlight lamp is installed, emitting with an inclination of -45° with respect to ground or to a horizontal direction.

In this way, a homogeneous light covering is ensured to the whole plant, preventing inhomogeneity of light supplies that might entail metabolic imbalances with negative repercussions on productivity.

In other words, assuming a plurality of lamps placed at different heights with respect to the plant to be grown, the angle of light emission of the lamp progressively decreases, from the lamp placed highest with respect to the plant, having a light emission angle up to -60°, to the lamp placed lowest with respect to plant, having a light emission angle up to 0°. In other words, the lowest lamp emits light perpendicularly with respect to the plant, which is supposed vertical with respect to ground or to a plane parallel to the ground or to a horizontal direction.

Said effect is believed to be due to a strong correlation between leaf temperature and stomatal conductance, index of the positive effect on vegetable metabolism.

In particular, it was experimentally detected that with this lighting method the leaf temperature (detected with an infrared thermometer) decreases by over two degrees centigrade, which improves the physiologic condition of the whole plant, with favourable repercussions on the quantity and quality of yield.

In the apparatus allowing the performance of the method according to the present invention, LEDs, which are the preferred light source of the lamp, emit light downward, with an inclination of the propagation axis of the radiating aperture at an angle ranging -30° - -60° with respect to ground. In particular, the interlight lamps used to perform the method according to the present invention might e.g. be the lamp described in IT 102017000048561 of the same applicant.

A first advantage of the present invention lies in the improved health and growth of the plant.

A second advantage of the present invention is the increase in yield of the healthy plant.

A third advantage is the optimization of the energy emitted by lamps for growing plants with artificial lighting.

Further advantages and properties of the present invention are disclosed in the following description, in which exemplary embodiments of the present invention are explained in detail based on the drawing:

Figure 1    Schematic lateral view of a typical arrangement of tree rows in a greenhouse;
Figure 2    Schematic lateral view of the absorption of light by leaves;
Figure3    Schematic lateral view of the first embodiment according to the present invention;
Figure 4    Schematic lateral view of the second embodiment according to the present invention;
Figure 5    Schematic lateral view of the third embodiment according to the present invention;
Figure 6    Transversal section of a lamp used to perform the method;
Figure 7    Exploded axonometric view of said lamp.

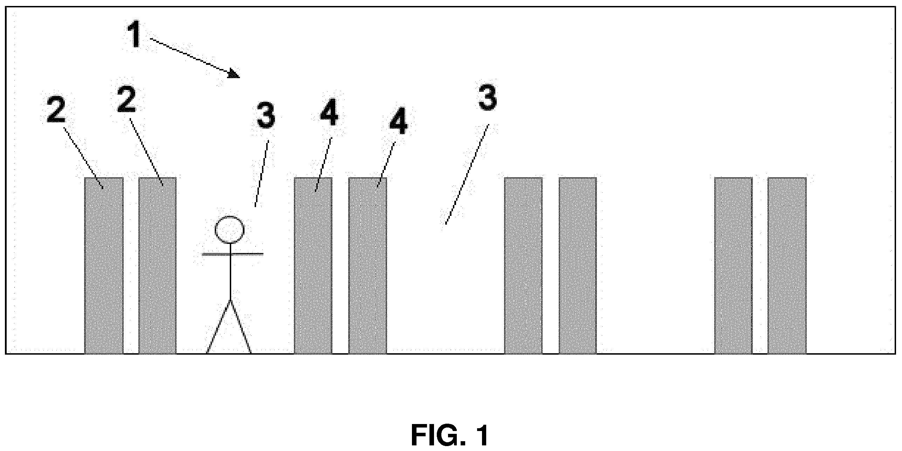

Figure 1 shows a typical arrangement of plant rows grown in a greenhouse 1 in a lateral schematic view. Typically, two adjacent plant rows 2 are grown at a distance indicatively ranging 30-70 cm; between two adjacent plant rows, interlight lamps are placed.

Alternatively, a single plant is subdivided into two main stolons, while the interlight lamp is placed between said two stolons.

On the other hand, between two contiguous plant rows 2 and 4 there is provided a passageway 3 sufficient for the passage of a man or of an agricultural machinery; typically said passageways are provided with a width ranging 0.8 - 2 metres.

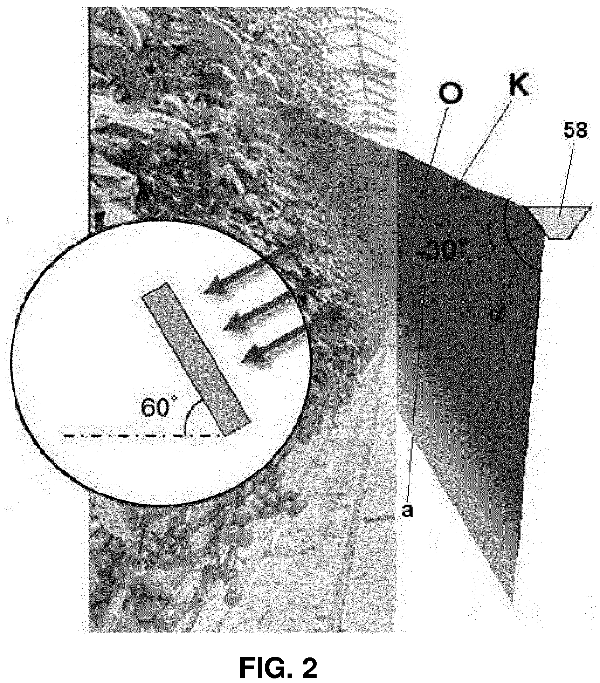

Figure 2 allows to better clarify what is meant with inclination of the light source. Lamps 5, 6, 7, 50 emit a light cone K having a characteristic aperture angle $\alpha$, due to a LED 58 itself and optionally to optics placed in front of the LED itself. The cone of light is provided with a longitudinal axis a, geometrically corresponding to cone height. The inclination of the light source corresponds to the inclination of the longitudinal axis a of the light cone with respect to ground or to a plane parallel to the ground or with respect to a horizontal direction.

Figure 2 schematically shows the complementary relation between the average inclination of leaves, here represented with an angle of 60° with respect to the orientation of ground indicated with O-axis, and the inclination of the light source, here represented with an inclination of -30° with respect to the same O-axis. To the skilled person it is apparent that to a different inclination of leaf lamina, e.g. at 45° or anyway to values ranging 60° - 45°, an inclination of the light source between -30° and -45° corresponds.

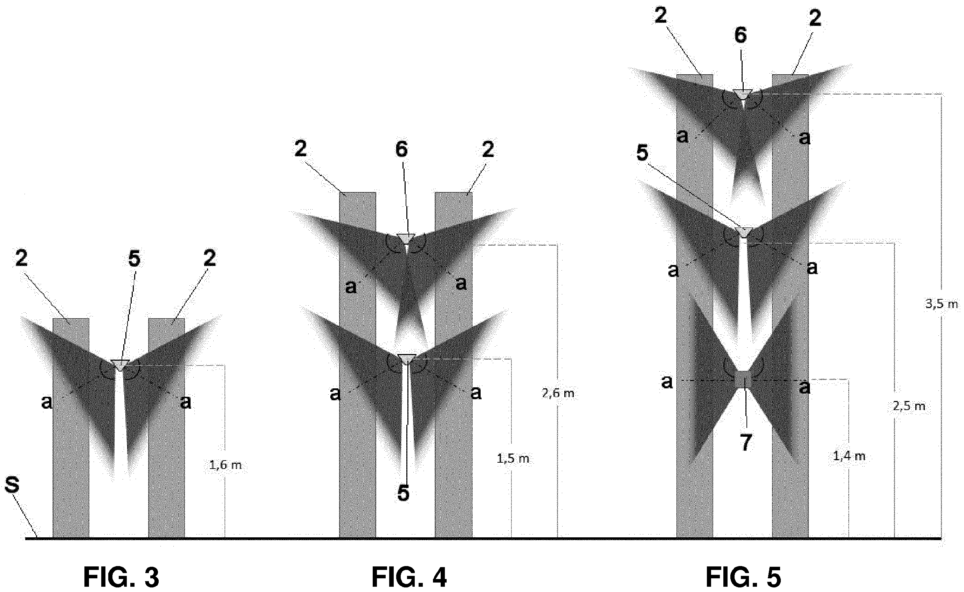

Figure 3 shows the first, simplest embodiment according to the present invention: two adjacent plants 2 with a height of about 2 metres from ground are lighted by a single interlight lamp emitting with an inclination of -30° with respect to ground, placed at a height ranging 1.3 m - 1.7 m from ground.

Figure 4 shows the second embodiment according to the present invention. Two adjacent plants 2 with a height of about 3 metres from ground are lighted by two interlight lamps, of which the first lamp 5 emits light with an inclination of -30° with respect to ground and is placed at a height ranging 1.1 m - 1.6 m from ground, while at a height ranging 2 - 2.7 metres from ground a second interlight lamp 6 emitting light with a inclination of -45° with respect to ground is placed.

Figure 5 shows the third embodiment, wherein the height of the plant is about 4 metres from ground. At a height ranging 1.1 m - 1.6 m from ground a first interlight lamp is installed, emitting light with an inclination of 0° with respect to ground, at a height ranging 2 - 2.7 metres from ground a second interlight lamp is installed, emitting light with an inclination of -30° with respect to ground, and at a height ranging 3 - 3.7 metres from ground a third interlight lamp 6 is installed, emitting light with a inclination of -45° with respect to ground, indicated with S in Figures 3, 4 and 5.

Experimentally, the average leaf temperature decreases of 6 - 8% using light emission angles of -30° - -45° as above described, with respect to a lighting performed with interlight lamps emitting with an inclination of 0° (i.e. emitting light perpendicularly to ground). In an experimental greenhouse growing tomatoes with a hydroponic system without soil, an average decrease of the leaf temperature from 27.4°C to 25.6°C was detected. Said result was validated by a correlation between stomatal conductance and leaf temperature with a coefficient of determination $r^2$ of 0.68, which confirms a better general physiologic condition of the leaves lighted performing the method according to the present invention.

Moreover, it was experimentally detected that the inclination of the light beam and the correct disposition of lamps exert a bigger effect in terms of quantitative yield than the modification of the light spectra, within given limits of blue/red relations (7% blue/93% red < chromatic relationship < 30% blue/70% red).

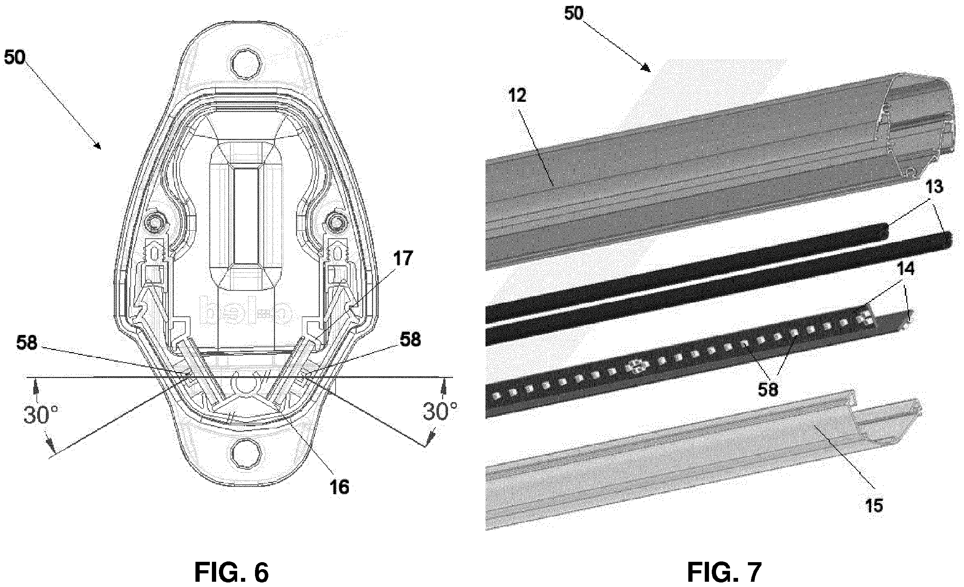

Figure 6 shows a lateral view of an interlight lamp 50 according to IT 102017000048561, which can be used to perform the method according to the present invention. In particular, the Figure shows one of the two lateral ends of lamp 50, wherein a side cover was removed for the sake of clarity. Said Figure shows a couple of LEDs 58 mounted, in a preferred embodiment, with an inclination of the propagation axis of the light radiation at 30° with respect to ground. It is apparent that this inclination can be modified as desired within the above-quoted range of 30-45°, as will be better described in the following.

Figure 7 shows an exploded view of a preferred embodiment of a generic interlight lamp 50 according to IT 102017000048561, wherein the inclination of LEDs is variable between -30° and -45°. Said lamp 50 comprises:

- A metallic frame 12, which in the preferred embodiment is made of aluminium;
- A couple of gaskets 13;
- A couple of PCBs (electronic boards) 14, on which a plurality of LEDs 58 are mounted at a regular distance;
- A transparent cover 15, allowing to seal LEDs, and at the same time to irradiate light.

The PCB 14 is kept in place by a couple of wings 16 and 17. Modifying the shape of said wings 16 and 17, the inclination of LEDs 58 can be varied, and therefore the orientation of the light cone emitted by them, which in the preferred embodiment shown here is -30° with respect to ground.

A variant may provide wings 16 and 17 having a pre-set and fixed inclination, and a combination of different inserts having a cuneiform section, with different aperture angles, which inserts can be singularly interposed or interposed in combination between PCB 14 and the corresponding wing 15, 16.

By providing a plurality of inserts with a conic section, having an angle of aperture of a pre-established value, two or more of said inserts can be combined and overlapped, in order to modify the angle of inclination according to a multiple of the angle of aperture of said inserts.

Providing two or more inserts having different angles of aperture is also possible; their combination allows to obtain different increases of the overall angle of aperture thanks to the combination of two or more inserts. E.g., by providing two different kinds of inserts, one having an angle of aperture of 5° and the other an angle of 10°, the increase steps can be of 5° each, maintaining a limited number of overlapped inserts.

Alternatively, the wings 15, 16 in the structure of the lamp can be adjustable. In this case, the wings can be pivotably hinged along a longitudinal edge and be provided along the opposed edge with blocking means with respect to the lamp in different angular positions. A solution can provide simple spacers, which interlock to the lamp structure and to the longitudinal edge of the wing opposed to the hinged edge. Solutions to fix a pivotable wing in a desired position are widespread in the state of the art, and the skilled person can draw from her/his common general knowledge.

In an alternative embodiment, it is obviously possible using LED lamps having the axis of the aperture cone of light emission parallel to the vertical axis of the lamp itself (i.e. substantially lamps emitting light perpendicularly with respect to ground or to a horizontal direction), and suitably inclining the whole LED lamp when installing it.

It is worthwhile remembering that plants require light levels between 100 and 1000 $\mu$mol s$^{-1}$ (Photosynthetic Photon Flux, PPF). Said lighting level can be obtained with lamps having a power between 20 and 400 Watt.

It is worthwhile reminding that the emission spectrum emitted by interlight lamps provides the emission of at least red radiations (600-700 nm) and blue radiations (400-500 nm). In a preferred embodiment, interlight lamps emit far-red radiations (700-850 nm), too. In an even more preferred embodiment, interlight lamps emit visible white light (400-700 nm), having the aim of facilitating the operation of human growers. Preferably, said radiations are emitted by LEDs (Light Emitting Diodes) emitting light having the desired wavelengths.

Although plants having vertical habits like e.g. Solanaceae and Cucurbitaceae, to which reference is made in this application, require one or more interlight lamps for a better yield, the light spectrum intended as the mix of red, blue and optionally far-red and white radiations can vary according to the specific crop. The specific choice of colour relationship remains a prerogative of the skilled person according to the concepts disclosed in the present description.

| | |
|---|---|
| 1 | greenhouse |
| 2 | plant |
| 3 | passageway |
| 4 | plant |
| 5 | interlight lamp emitting light with an inclination of -30° |
| 6 | interlight lamp emitting light with an inclination of -45° |
| 7 | interlight lamp emitting light with an inclination of 0° |
| 12 | metal frame |
| 13 | gasket |
| 14 | PCB |
| 15 | transparent cover |
| 50 | generic interlight lamp |
| 58 | LED |
| $\alpha$ | aperture angle of the light cone emitted by LED |
| a | axis of the light cone emitted by LED |
| K | light cone emitted by LED |
| O | ground axis or axis parallel to ground |
| S | ground |

**Claims**

1. Method for lighting plants grown in a greenhouse, making use of at least one interlight lamp (5, 6, 7, 50) placed between two adjacent plants or stolons (2) comprising the following steps:

   - Determining the height in metres of the plants to be grown;
   - In order to determine the number of interlight lamps (5, 6, 7) to be installed in the greenhouse, making use of the formula

$$\text{N. of lamps} = \text{height in metres of the plants} - 1$$

   - Installing the indicated number of interlight lamps, with at least one lamp (5, 7) placed at an height from the ground ranging 1.3-1.7 metres,

   **characterized in that**
   the axis (a) of the cone (K) of light emission of said interlight lamps (5, 6, 7) is provided with an inclination angle with respect to the ground (S) and/or to a plane parallel to the ground and/or to a horizontal direction, which angle is variable according to the height of placement from the ground of said lamp with respect to the plant height, i.e. to the point of emergence of plant trunk with respect to the ground.

2. Method for lighting plants grown in a greenhouse, making use of at least one interlight lamp (5) placed between two adjacent plants or stolons (2) according to claim 1, wherein the vertical dimension of the plant is in the order of three metres from ground i.e. from the surface from which the plant trunk emerges, and the second interlight lamp is installed at a height ranging 2-2.7 m from ground, i.e. from the surface from which the plant trunk emerges.

3. Method for lighting plants grown in a greenhouse, making use of at least one interlight lamp (5) placed between two adjacent plants or stolons (2) according to claim 2, wherein the vertical dimension of the plant is in the order of four metres from ground, i.e. from the surface from which the plant trunk emerges, and the third lamp (6) is installed at a height ranging 3 - 3.7 m from ground, i.e. from the surface from which the plant trunk emerges.

4. Method for lighting plants grown in a greenhouse, making use of at least one interlight lamp (50) placed between two adjacent plants or stolons (2) according to one or more of claims 1-3, wherein the angle of inclination of the light emission cone of interlight lamps (5, 6, 7) is variable according to the height at which the said lamp is placed, ranging 0° to -60° with respect to ground, i.e. from the surface from which the plant trunk emerges or to a horizontal direction.

5. Method for lighting plants grown in a greenhouse, making use of at least one interlight lamp (50) placed between two adjacent plants or stolons (2) according to one or more of claims 1-4, wherein, in the case of plants up to two metres high with respect to ground, the angle of inclination of light emission cone of the interlight lamp (5) placed at 1.3-1.7 m from ground is -30° with respect to ground, i.e. from the surface from which the plant trunk emerges or to a horizontal direction.

6. Method for lighting plants grown in a greenhouse, making use of at least one interlight lamp (50) placed between two adjacent plants or stolons (2) according to one or more of claims 1-4, wherein, in the case of plants up to three metres high with respect to ground, the angle of inclination of light emission cone of the interlight lamp (5) placed at 1.3-1.7 m from ground, i.e. from the surface from which the plant trunk emerges is -30° with respect to ground or to a horizontal direction, i.e. from the surface from which the plant trunk emerges, while the angle of inclination of light emission cone of the interlight lamp (6) placed at a height ranging 2 - 2.7 metres from the ground is -45° with respect to ground i.e. from the surface from which the plant trunk emerges or to a horizontal direction.

7. Method for lighting plants grown in a greenhouse, making use of at least one interlight lamp (50) placed between two adjacent plants or stolons (2) according to one or more of claims 1-4, wherein, in the case of plants up to four metres high from ground or from the surface from which the plant trunk emerges, the angle of inclination of light emission cone of the interlight lamp (7) placed at 1.3-1.7 m from ground is 0° with respect to ground, i.e. from the surface from which the plant trunk emerges or to a horizontal direction, the angle of inclination of light emission cone of the interlight lamp (5) placed at a height ranging 2 - 2.7 metres from ground i.e. from the surface from which the plant trunk emerges is -30° with respect to ground or to a horizontal direction, while the angle of light emission of the interlight lamp (6) placed at 3-3.7 m from ground i.e. from the surface from which the plant trunk emerges is -45° with respect to the ground or to a horizontal direction.

8. Combination of at least two interlight lamps (5, 6, 7, 50) provided with different angles of inclination of the axis (a) of the light cone (K), for performing the method according to one or more of claims 1-7, wherein the angle of the light emission cone (K) axis (a) emitted by LEDs (58) is due to the inclination of a PCB (14) on which LEDs (58) are mounted with respect to the ground (S), i.e. from the surface from which the plant trunk emerges or to a horizontal direction.

9. Interlight lamp (50) according to claim 8, wherein a plurality of LEDs (58) are mounted on a PCB (14), whose inclination determines the angle of inclination of the axis (a) of the light emission cone (K), wherein the inclination of said PCB with respect to ground is incrementally varied through the addition of spacers interlocked to lamp structure.

10. Combination of at least two interlight lamps (5, 6, 7) provided with different angles of inclination of the axis (a) of the light cone (K), to perform the method according to claims 1-7, wherein the axis (a) of the aperture cone of light (K) emission is always parallel to the vertical axis of the lamp itself, i.e. lamps emit light perpendicularly with respect to ground (S) or to a horizontal direction, while the lamp is installed between two adjacent plant rows with an inclination of said lamps ranging 0° to -60° with respect to the surface from which plant trunk emerges or to a horizontal direction.

11. Interlight lamps (5, 6, 7) according to one or more of claims 8-10, wherein the emission spectrum emitted by said interlight lamps comprises at least red radiations (600-700 nm) and blue radiations (400-500 nm), preferably far-red radiations (700-850 nm) too, and even more preferably visible white light (400-700 nm), too.

**FIG. 1**

FIG. 2

**FIG. 3**          **FIG. 4**          **FIG. 5**

**FIG. 6**

**FIG. 7**

EP 3 533 318 A1

Europäisches
Patentamt

European
Patent Office

Office européen
des brevets

# EUROPEAN SEARCH REPORT

Application Number

EP 19 15 9926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 656 728 A1 (VALOYA OY [FI]) 30 October 2013 (2013-10-30) | 8-11 | INV. A01G7/04 A01G9/20 |
| A | * abstract; figures 1A,1B,1C,3 * <br> * paragraph [0012] * <br> * paragraph [0016] - paragraph [0021] * <br> * paragraph [0026] * | 1-7 | |
| X | US 2014/268635 A1 (AIKALA LARS [FI] ET AL) 18 September 2014 (2014-09-18) | 8-10 | |
| A | * the whole document * | 1-7 | |
| X | US 2012/043907 A1 (LU JUNYING JONATHAN [US] ET AL) 23 February 2012 (2012-02-23) | 8-10 | |
| A | * the whole document * | 1-7 | |
| A | WO 2017/037332 A1 (NETLED OY [FI]) 9 March 2017 (2017-03-09) * the whole document * | 1-11 | |
| A | WO 2013/088829 A1 (PANASONIC CORP [JP]) 20 June 2013 (2013-06-20) * the whole document * | 1-11 | TECHNICAL FIELDS SEARCHED (IPC) <br> A01G |

The present search report has been drawn up for all claims

| Place of search | Date of completion of the search | Examiner |
|---|---|---|
| The Hague | 25 March 2019 | Balzar, Maarten |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 15 9926

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2019

| Patent document cited in search report | | Publication date | Patent family member(s) | | Publication date |
|---|---|---|---|---|---|
| EP 2656728 | A1 | 30-10-2013 | CA | 2865189 A1 | 31-10-2013 |
| | | | EP | 2656728 A1 | 30-10-2013 |
| | | | US | 2013283683 A1 | 31-10-2013 |
| | | | WO | 2013160534 A1 | 31-10-2013 |
| US 2014268635 | A1 | 18-09-2014 | US | 2014268635 A1 | 18-09-2014 |
| | | | WO | 2014140416 A1 | 18-09-2014 |
| US 2012043907 | A1 | 23-02-2012 | NONE | | |
| WO 2017037332 | A1 | 09-03-2017 | EP | 3344032 A1 | 11-07-2018 |
| | | | JP | 2018531588 A | 01-11-2018 |
| | | | US | 2018249644 A1 | 06-09-2018 |
| | | | WO | 2017037332 A1 | 09-03-2017 |
| WO 2013088829 | A1 | 20-06-2013 | CN | 103929944 A | 16-07-2014 |
| | | | JP | 5874060 B2 | 01-03-2016 |
| | | | JP | 2013126382 A | 27-06-2013 |
| | | | TW | 201325439 A | 01-07-2013 |
| | | | WO | 2013088829 A1 | 20-06-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2656728 A1
- US 2014268635 A
- US 2012043907 A, Lu Junying Jonathan
- IT 102017000048561

**Non-patent literature cited in the description**

- **DIELEMAN et al.** *Acta Hortic. 1134,* 2016